# EUROPÄISCHE PATENTSCHRIFT

(11) **EP 3 264 494 B1**
(45) Veröffentlichungstag und Bekanntmachung des Hinweises auf die Patenterteilung: **07.06.2023**
(21) Anmeldenummer: 17001071.4
(22) Anmeldetag: 23.06.2017
(51) Int. Cl.: H01M 50/204, H01M 50/262, H01M 50/271

(54) **BATTERIEMODUL FÜR EIN FAHRZEUG, INSBESONDERE FÜR EIN NUTZFAHRZEUG**
BATTERY MODULE FOR A VEHICLE, IN PARTICULAR A COMMERCIAL VEHICLE
MODULE DE BATTERIE POUR UN VÉHICULE, EN PARTICULIER POUR UN VÉHICULE UTILITAIRE

(30) Priorität: 28.06.2016 DE 102016007882
(43) Veröffentlichungstag der Anmeldung: 03.01.2018
(73) Patentinhaber: MAN Truck & Bus SE, 80995 München (DE)
(72) Erfinder: Hubert, Markus, 81247 München (DE); Braun, Reimar, 81735 München (DE)
(74) Vertreter: Liebl, Thomas

(56) Entgegenhaltungen:
- EP-A1- 2 808 922
- DE-A1-102011 075 820
- DE-A1-102012 216 916
- DE-A1-102013 225 574
- DE-A1-102014 212 181
- US-A1- 2016 133 997

## Beschreibung

Die Erfindung betrifft ein Batteriemodul für ein Fahrzeug, insbesondere für ein Nutzfahrzeug, nach dem Oberbegriff des Patentanspruches 1, ein Verfahren zur Herstellung eines Batteriemoduls nach dem Oberbegriff des Patentanspruches 12 sowie ein Fahrzeug, insbesondere ein Nutzfahrzeug, mit dem Batteriemodul nach Patentanspruch 14.

Es ist bekannt, an einem Hybridfahrzeug, dessen Antriebseinrichtung einen Verbrennungsmotor und einen Elektromotor aufweist, oder an einem reinen Elektrofahrzeug, dessen Antriebseinrichtung nur einen Elektromotor aufweist, ein Batteriemodul vorzusehen, mittels dem elektrische Energie zum Antreiben des Fahrzeugs bzw. zum Betreiben des Elektromotors zwischengespeichert werden kann. Ein derartiges Batteriemodul weist ein Gehäuse auf, in dem bzw. in dessen Aufnahmeraum üblicherweise mehrere Batteriezellenelemente angeordnet sind. Jedes dieser Batteriezellenelement weist dabei üblicherweise mehrere Batteriezellen bzw. Akkumulatorzellen auf.

Des Weiteren ist es auch bekannt, an dem Batteriemodul eine Kühl- und/oder Heizeinrichtung vorzusehen, mittels der die Batteriezellen gekühlt und/oder geheizt werden können. Je nach Fahrzeugtyp gibt es dabei unterschiedliche Anforderungen bezüglich der Heizung bzw. Kühlung der Batteriezellen.

Beispielsweise ist es bei einem reinen Elektrofahrzeug üblicherweise erforderlich, die Batteriezellen beim Fahrzeugstart zu beheizen, um die Batteriezellen schnell in einen Betriebstemperaturbereich zu bringen, in dem die Leistungsanforderungen erfüllen werden können. Bei einem Hybridfahrzeug ist es demgegenüber regelmäßig nicht erforderlich, die Batteriezellen beim Start des Fahrzeugs zu beheizen, da der Verbrennungsmotor bereits beim Fahrzeugstart eine ausreichende Antriebsleistung und zudem auch relativ schnell eine hohe Wärmeenergie bzw. Abwärme bereitstellt. Des Weiteren gibt es auch je nach Leistung, Standzeiten und Umweltbedingungen unterschiedliche Anforderungen bezüglich der Heizung bzw. Kühlung der Batteriezellen.

Des Weiteren ist es auch bekannt, die Kühl- und/oder Heizeinrichtung des Batteriemoduls zumindest teilweise fest in das Batteriemodul-Gehäuse zu integrieren. Ein derartiger Aufbau ist beispielsweise aus der DE 10 2011 082 199 A1 bekannt, bei der das Gehäuse zusammen mit den Batteriezellen einen Strömungskanal ausbildet, der zur Kühlung der Batteriezellen von einer Kühlflüssigkeit durchströmt wird. Bei einer derart in das Gehäuse integrierten Kühl- und/oder Heizeinrichtung werden jedoch nicht nur die Batteriezellen, sondern auch das eine relativ hohe thermische Masse aufweisende Gehäuse gekühlt bzw. geheizt, was sich negativ auf die Kühlung bzw. Heizung der Batteriezellen auswirkt. Bei bestimmten Fahrzeugtypen, beispielsweise bei Schnelllade-Bussen, reicht eine derartige Kühlung bzw. Heizung der Batteriezellen aus, um die Batteriezellen in einen optimalen Temperaturbereich zu bringen. Bei anderen Fahrzeugtypen, beispielsweise bei Nachtlade-Bussen oder Hybridfahrzeugen, reicht diese Art der Heizung bzw. Kühlung der Batteriezellen jedoch nicht aus, um die Batterien in einen optimalen Temperaturbereich zu bringen.

Aus der DE 10 2011 075 820 A1 ist eine Traktionsbatterie und eine Temperiervorrichtung für eine solche Traktionsbatterie bekannt.

Aufgabe der Erfindung ist es, ein Batteriemodul für ein Fahrzeug, insbesondere für ein Nutzfahrzeug, sowie ein Verfahren zur Herstellung eines Batteriemoduls bereitzustellen, mittels denen die Flexibilität des Batteriemoduls auf einfache Weise erhöht wird.

Die Aufgabe wird gelöst mit den Merkmalen der unabhängigen Patentansprüche. Bevorzugte Weiterbildungen sind in den Unteransprüchen offenbart.

Gemäß Patentanspruch 1 wird ein Batteriemodul für ein Fahrzeug, insbesondere für ein Nutzfahrzeug, vorgeschlagen, mit einem, einen Aufnahmeraum aufweisenden, insbesondere kastenförmigen und/oder quaderförmigen, Gehäuse, wobei in dem Aufnahmeraum wenigstens ein, insbesondere mehrere, Batteriezellenelement angeordnet ist, und mit einer Kühl- und/oder Heizeinrichtung, mittels der das Batteriezellenelement gekühlt und/oder geheizt werden kann. Erfindungsgemäß ist die Kühl- und/oder Heizeinrichtung durch ein Kühl- und/oder Heizmodul als separates Bauteil bzw. Montageelement gebildet, das mittels einer Fixiereinrichtung, insbesondere lösbar, an dem Gehäuse festgelegt werden kann.

Auf diese Weise wird die Flexibilität des Batteriemoduls deutlich erhöht, da die Kühl- und/oder Heizeinrichtung nun nicht mehr fest in das Batteriemodul-Gehäuse integriert ist. Anstelle dessen ist die gesamte Kühl- und/oder Heizeinrichtung nun durch ein an dem Gehäuse des Batteriemoduls festlegbares Kühl- und/oder Heizmodul gebildet. Mittels eines derartigen Aufbaus kann je nach Fahrzeugtyp fertigungstechnisch einfach und effektiv eine Kühl- und/oder Heizeinrichtung mit für den jeweiligen Fahrzeugtyp optimalen Kühl- und/oder Heizeigenschaften ausgewählt und an dem Batteriemodul vorgesehen werden. Ebenso kann die Kühl- und/oder Heizeinrichtung bei dem erfindungsgemäßen Aufbau auch einfach ausgetauscht werden, wenn sie beispielsweise defekt ist. Des Weiteren wird mit diesem Aufbau auch die Fertigung des Batteriemoduls vereinfacht, da das Gehäuse und die Kühl- und/oder Heizeinrichtung nun separat voneinander gefertigt werden können.

Erfindungsgemäß weist das Gehäuse, insbesondere eine vordere und/oder seitliche Gehäusewand, eine Einschuböffnung auf, durch die das, insbesondere plattenförmige, Kühl- und/oder Heizmodul schubladenartig in den Aufnahmeraum des Gehäuses eingeschoben werden kann. So kann das Kühl- und/oder Heizmodul erfindungsgemäß montagetechnisch einfach, zuverlässig und vor äußeren Einflüssen geschützt an dem Gehäuse des Batteriemoduls festgelegt werden. Erfindungsgemäß weist das Gehäuse ein, insbesondere plattenförmiges, Verschlusselement auf, mittels dem die Einschuböffnung des Gehäuses verschlossen werden kann.

Vorzugsweise weist das Gehäuse eine Führungseinrichtung auf, mittels der das zumindest teilweise in das Gehäuse eingeschobene Kühl- und/oder Heizmodul linear verlagerbar geführt ist, um die Montage des Batteriemoduls zu vereinfachen und das Kühl- und/oder Heizmodul zuverlässig in einer definierten Position im Aufnahmeraum des Batteriemoduls anordnen zu können.

In einer bevorzugten konkreten Ausgestaltung ist die Fixiereinrichtung und/oder die Führungseinrichtung durch in Gehäuse-Längsrichtung verlaufende, insbesondere nutartige, Vertiefungen in gegenüberliegenden seitlichen Gehäusewänden gebildet, in denen das in das Gehäuse eingeschobene Kühl- und/oder Heizmodul, insbesondere randseitig, konturangepasst einliegt, um die Fixiereinrichtung bzw. die Führungseinrichtung einfach und effektiv auszubilden. Bevorzugt ist dabei vorgesehen, dass die Fixiereinrichtung zudem auch durch eine in Gehäuse-Querrichtung verlaufende, insbesondere nutartige, Vertiefung in einer hinteren Gehäusewand gebildet ist, in der das in das Gehäuse eingeschobene Kühl- und/oder Heizmodul ebenfalls, insbesondere randseitig, konturangepasst einliegt.

Alternativ zu der Einschuböffnung kann das, insbesondere plattenförmige, Kühl- und/oder Heizmodul auch ein Deckelelement bzw. Verschlusselement ausbilden, mittels dem das Gehäuse unterseitig oder oberseitig verschlossen werden kann, was nicht von der Erfindung umfasst ist. Dann ist das Kühl- und/oder Heizmodul mittels wenigstens eines Befestigungsmittels und/oder mittels wenigstens einer Schraubverbindung an dem Gehäuse des Batteriemoduls festgelegt.

Zweckmäßig kann das an dem Gehäuse festgelegte Kühl- und/oder Heizmodul in, insbesondere flächiger, Anlage mit dem Gehäuse des Batteriemoduls sein. Das an dem Gehäuse festgelegte Kühl- und/oder Heizmodul kann dabei beispielsweise in, insbesondere flächiger, Anlage mit einer unteren Gehäusewand und/oder mit wenigstens einer seitlichen Gehäusewand und/oder mit einer hinteren Gehäusewand sein.

Erfindungsgemäß weist das Kühl- und/oder Heizmodul ein, insbesondere plattenförmiges, Kühl- und/oder Heizelement auf, mittels dem das wenigstens eine Batteriezellenelement gekühlt und/oder geheizt werden kann. Bevorzugt ist dabei vorgesehen, dass das wenigstens eine Batteriezellenelement wärmeübertragend mit dem Kühl- und/oder Heizelement verbunden ist, um das wenigstens eine Batteriezellenelement effektiv mittels des Kühl- und/oder Heizelements zu kühlen bzw. zu heizen. Vorzugsweise ist dabei zwischen dem wenigstens einem Batteriezellenelement und dem Kühl- und/oder Heizelement zur verbesserten Wärmeleitung wenigstens ein, insbesondere mattenartiges und/oder flexibles, Wärmeleitungs-Element, beispielsweise ein Wärmeleitpad oder ein Gap-Pad, angeordnet, das sowohl mit dem Batteriezellenelement als auch mit dem Kühl- und/oder Heizelement in flächiger Anlage ist.

Weiter bevorzugt weist das Kühl- und/oder Heizelement wenigstens einen Strömungskanal auf, der zur Kühlung und/oder Heizung des wenigstens einen Batteriezellenelements von einem, insbesondere flüssigen, Wärmeträger, insbesondere von einem Kühl- und/oder von einem Heizmittel, durchströmt werden kann. Mittels eines derartigen Wärmeträgers kann das wenigstens eine Batteriezellenelement einfach und effektiv gekühlt bzw. geheizt werden. Bevorzugt ist dabei vorgesehen, dass das Kühl- und/oder Heizelement wenigstens eine Anschlusseinrichtung aufweist, mittels der das Kühl- und/oder Heizelement mit einer, insbesondere fahrzeugseitigen Wärmeträger-Zuführleitung und/oder mit einer, insbesondere fahrzeugseitigen, Wärmeträger-Abführleitung, insbesondere strömungstechnisch, verbunden werden kann, um das Kühl- und/oder Heizmodul montagetechnisch einfach und zuverlässig in einen Kühlmittelkreislauf bzw. Heizmittelkreislauf integrieren zu können.

Erfindungsgemäß ist zur Einstellung einer definierten Wärmeübertragung zwischen dem Gehäuse und dem daran anliegenden Kühl- und/oder Heizelement, als Zwischenlage zwischen dem Gehäuse und dem Kühl- und/oder Heizelement wenigstens ein Wärmeübertragungselement mit definierten Wärmeübertragungseigenschaften angeordnet. Bevorzugt ist dabei vorgesehen, dass das Wärmeübertragungselement derart ausgebildet und angeordnet ist, dass das an dem Gehäuse festgelegte Kühl- und/oder Heizelement nicht in Anlage mit dem Gehäuse ist bzw. lediglich in Anlage mit dem Wärmeübertragungselement ist. Vorzugsweise weist das Wärmeübertragungselement dabei vibrationsdämpfende und/oder die Resonanz des Batteriemodul beeinflussende Eigenschaften auf.

Erfindungsgemäß ist das Wärmeübertragungselement dem Kühl- und/oder Heizmodul zugeordnet, so dass das Kühl- und/oder Heizelement und das Wärmeübertragungselement eine Baueinheit ausbilden. Auf diese Weise kann das Wärmeübertragungselement montagetechnisch einfach an dem Batteriemodul vorgesehen werden. Das Wärmeübertragungselement kann dabei beispielsweise durch eine Beschichtung des Kühl- und/oder Heizelements gebildet sein oder alternativ auch durch ein separates Bauteil gebildet sein, das mit dem Kühl- und/oder Heizelement verbunden wird. Bevorzugt ist dabei vorgesehen, dass das Kühl- und/oder Heizelement und das, insbesondere starr und/oder als Hartschale ausgebildete, Wärmeübertragungselement formschlüssig und/oder stoffschlüssig miteinander verbunden sind.

Zweckmäßig kann das Wärmeübertragungselement durch ein, eine geringe Wärmeleitfähigkeit, insbesondere eine Wärmeleitfähigkeit (λ) kleiner als 0,1 W/mK, aufweisendes bzw. wärmeisolierendes Material gebildet sein. Alternativ kann das Wärmeübertragungselement auch durch ein, eine hohe Wärmeleitfähigkeit, bevorzugt eine Wärmeleitfähigkeit größer als 10 W/(m•K), besonders bevorzugt eine Wärmeleitfähigkeit größer als 70 W/(m•K), aufweisendes Material gebildet sein.

Vorzugsweise sind das Gehäuse und das Wärmeübertragungselement im Wesentlichen aus demselben Material, insbesondere aus Aluminium und/oder aus derselben AluminiumLegierung, gefertigt, um einer Korrosion dieser Komponenten entgegenzuwirken.

Zur Lösung der bereits genannten Aufgabe wird ferner ein Verfahren zur Herstellung eines Batteriemoduls beansprucht, wobei das Batteriemodul ein, einen Aufnahmeraum aufweisendes, insbesondere kastenförmiges und/oder quaderförmiges, Gehäuse aufweist, wobei in dem Aufnahmeraum wenigstens ein Batteriezellenelement des Batteriemoduls angeordnet ist, und wobei das Batteriemodul eine Kühl- und/oder Heizeinrichtung aufweist, mittels der das Batteriezellenelement gekühlt und/oder geheizt wird. Erfindungsgemäß ist die Kühl- und/oder Heizeinrichtung durch ein Kühl- und/oder Heizmodul als separates Bauteil gebildet, das mittels einer Fixiereinrichtung, insbesondere lösbar, an dem Gehäuse festgelegt wird.

Die sich durch die erfindungsgemäße Verfahrensführung ergebenden Vorteile sind identisch mit den bereits gewürdigten Vorteile des erfindungsgemäßen Batteriemoduls, so dass diese an dieser Stelle nicht wiederholt werden.

In einer bevorzugten erfindungsgemäßen Verfahrensführung weist das Kühl- und/oder Heizmodul ein, insbesondere plattenförmiges, Kühl-und/oder Heizelement auf, mittels dem das wenigstens eine Batteriezellenelement gekühlt und/oder geheizt wird, wobei bei der Montage des Kühl- und/oder Heizmoduls mehrere, insbesondere zwei, Wärmeübertragungselemente mit unterschiedlichen Wärmeübertragungseigenschaften, insbesondere mit unterschiedlichen Wärmeleitfähigkeits-Werten bereitgestellt bzw. vorgehalten werden, wobei mittels des jeweiligen Wärmeübertragungselements eine definierte Wärmeübertragung zwischen dem Gehäuse und dem Kühl- und/oder Heizelement eingestellt wird, und wobei in Abhängigkeit vom Fahrzeugtyp des Fahrzeugs, an das das Batteriemodul montiert werden soll, insbesondere selbsttätig, aus den mehreren Wärmeübertragungselement ein Wärmeübertragungselement ausgewählt und montiert wird. Auf diese Weise kann das Batteriemodul fertigungstechnisch einfach und effektiv an unterschiedliche Fahrzeugtypen angepasst werden.

Alternativ oder zusätzlich kann bei der Montage des Kühl- und/oder Heizmoduls in Abhängigkeit vom Fahrzeugtyp des Fahrzeugs, an das das Batteriemodul montiert werden soll, insbesondere selbsttätig, auch ein Wärmeübertragungselement mit definierten Wärmeübertragungseigenschaften an dem Kühl- und/oder Heizmodul vorgesehen werden oder nicht. So kann das Batteriemodul ebenfalls einfach und effektiv an unterschiedliche Fahrzeugtypen angepasst werden.

Des Weiteren wird auch ein Fahrzeug, insbesondere ein Nutzfahrzeug, mit dem erfindungsgemäßen Batteriemodul beansprucht. Die sich hieraus ergebenden Vorteile sind ebenfalls identisch mit den bereits gewürdigten Vorteilen des erfindungsgemäßen Batteriemoduls und werden an dieser Stelle ebenfalls nicht wiederholt.

Die vorstehend erläuterten und/oder in den Unteransprüchen wiedergegebenen vorteilhaften Aus- und/oder Weiterbildung der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer schematischen Perspektivdarstellung ein erfindungsgemäßes Batteriemodul;
- Figur 2: in einer Darstellung gemäß Figur 1 das Batteriemodul ohne Verschlusselement;
- Figur 3: eine Schnittdarstellung entlang der Schnittebene A-A aus Figur 2;
- Figur 4: eine Schnittdarstellung entlang der Schnittebene B-B aus Figur 2;
- Figur 5: eine schematische Darstellung, anhand der die Herstellung des Batteriemoduls erläutert wird;
- Figur 6: in einer Darstellung gemäß Figur 1 eine nicht von der Erfindung umfasste Ausführungsform des erfindungsgemäßen Batteriemoduls; und
- Figur 7: eine Schnittdarstellung entlang der Schnittebene C-C aus Figur 6.

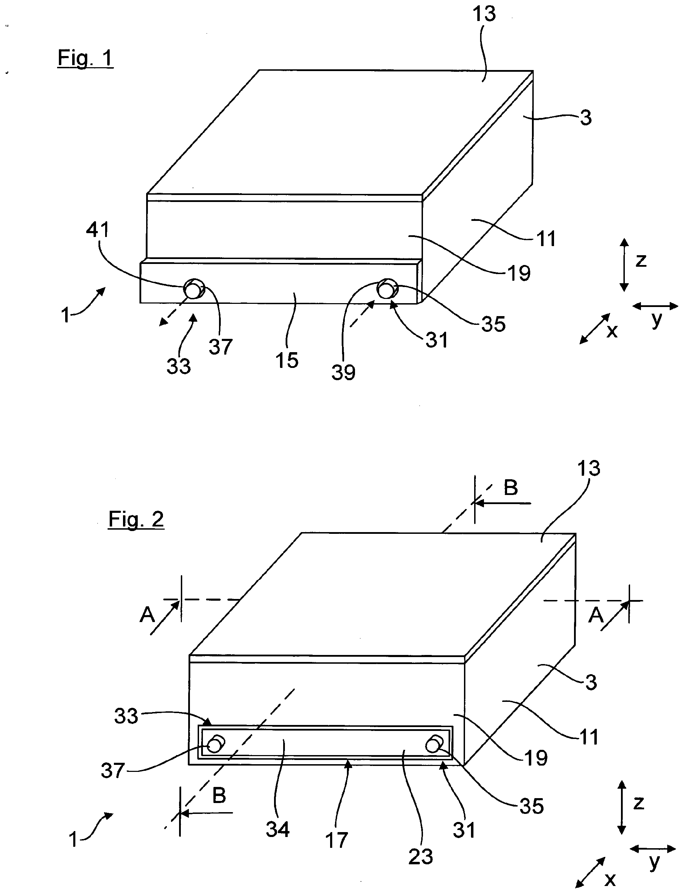

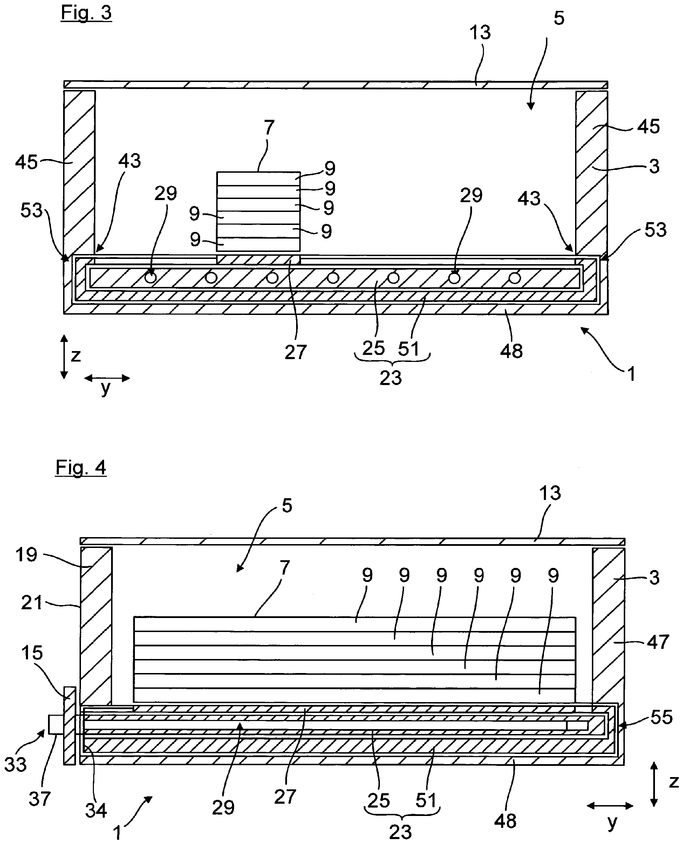

In Figur 1 ist eine Ausführungsform eines erfindungsgemäßen Batteriemoduls 1 für ein Fahrzeug gezeigt. Das Batteriemodul 1 weist ein hier beispielhaft kastenförmiges Gehäuse 3 auf, das einen Aufnahmeraum bzw. Hohlraum 5 (Figur 3) ausbildet, in dem mehrere Batteriezellenelemente 7 angeordnet sind. Zur Vereinfachung der Darstellung ist hier lediglich ein einziges Batteriezellenelement 7 gezeigt. Jedes Batteriezellenelement 7 weist hier beispielhaft mehrere Batteriezellen 9 auf und bildet hier daher ein Zellenmodul aus. Alternativ könnte das Batteriezellenelement 7 aber auch nur eine einzige Batteriezelle 9 aufweisen.

Gemäß Figur 1 weist das Gehäuse 3 hier beispielhaft einen, im Hochrichtung z gesehen, oberseitig offenen Grundkörper bzw. Batterietrog 11 und einen lösbaren, hier beispielhaft plattenförmigen, Deckel 13 auf, mittels dem das Gehäuse 3 oberseitig verschlossen werden kann. Zum Verschließen des Gehäuses 3 wird der Deckel 13 hier beispielhaft mittels mehrerer Schraubverbindungen abdichtend an dem Grundkörper 11 festgelegt bzw. befestigt.

Wie weiter aus den Figur 1 und 2 hervorgeht, weist das Gehäuse 3 hier auch ein plattenförmiges Verschlusselement 15 auf, mittels dem eine, hier lediglich beispielhaft rechteckförmige, Einschuböffnung 17 in einer, in Längsrichtung x gesehen, vorderen Gehäusewand 19 des Gehäuses 3 bzw. des Gehäuse-Grundkörpers 11 abdichtend verschlossen werden kann. In Figur 1 ist das Verschlusselement 15 hier dabei an der vorderen Wand 19 des Gehäuses 3 festgelegt, so dass die Einschuböffnung 17 der vorderen Gehäusewand 19 mittels des Verschlusselements 15 geschlossen ist. In Figur 2 ist das Verschlusselement 15 nicht an dem Gehäuse 3 festgelegt, so dass die Einschuböffnung 17 der vorderen Gehäusewand 19 geöffnet bzw. zugänglich ist. Zum Verschließen der Einschuböffnung 17 wird das Verschlusselement 15 hier in Anlage mit einem äußeren Wandbereich 21 (Fig. 4) der vorderen Gehäusewand 19 gebracht und hier beispielhaft mittels mehrerer Schraubverbindungen lösbar mit dem Gehäuse 3 verbunden. Die Einschuböffnung 17 ist hier beispielhaft an einem, in Hochrichtung z gesehen, unteren Bereich der vorderen Gehäusewand 19 angeordnet und erstreckt sich in Querrichtung y im Wesentlichen entlang der gesamten vorderen Gehäusewand 19.

Des Weiteren kann durch die Einschuböffnung 17 des Gehäuses 3 ein hier im Wesentlichen plattenförmiges Kühl- und/oder Heizmodul 23 schubladenartig in das Gehäuse 3 bzw. in den Aufnahmeraum 5 des Gehäuses 3 eingeschoben werden. Auf diese Weise kann das Kühl- und/oder Heizmodul 23 als separates Bauteil lösbar an dem Gehäuse 3 festgelegt werden.

Gemäß Fig. 3 weist das Kühl- und/oder Heizmodul ein Kühl- und/oder Heizelement 25 auf, mittels dem die ebenfalls in den Aufnahmeraum 5 des Gehäuses 3 angeordneten Batteriezellenelemente 7 gekühlt bzw. geheizt werden können. Für eine effektive Kühlung bzw. Heizung der Batteriezellenelemente 7 ist hier beispielhaft ein Wärmeleitpad bzw. ein Gap-Pad 27 zwischen dem plattenförmigen Kühl- und/oder Heizelement 25 und dem jeweiligen Batteriezellenelement 7 angeordnet, mittels dem eine verbesserte Wärmeleitung zwischen dem Kühl- und/oder Heizelement 25 und dem jeweiligen Batteriezellenelement 7 erreicht wird. Das jeweilige Wärmeleitpad 27 ist hier dabei als Zwischenlage zwischen dem jeweiligen Batteriezellenelement 7 und dem Kühl- und/oder Heizelement angeordnet und in flächiger Anlage sowohl mit dem Kühl- und/oder Heizelement 25 als auch dem jeweiligen Batteriezellenelement 7. Des Weiteren sind die Batteriezellenelemente 7 hier beispielhaft mittels Schraubverbindungen lösbar mit dem Kühl- und/oder Heizelement 25 verbunden, so dass die Batteriezellenelemente 7 mit eines definierten Anpresskraft gegen das Kühl- und/oder Heizelement 25 gedrückt bzw. gepresst werden. So wird die Kühlung bzw. Heizung der Batteriezellenelemente 7 ebenfalls verbessert.

Gemäß Figur 3 und Figur 4 weist das Kühl- und/oder Heizelement 25 hier auch einen Strömungskanal 29 auf, der zur Kühlung bzw. Heizung der Batteriezellenelemente 7 von einem flüssigen Wärmeträger durchströmt wird. Der Strömungskanal 29 erstreckt sich hier beispielhaft wellenförmig bzw. mäanderförmig von einem Wärmeträger-Eintritt 31 (Fig. 1) bis zu einem Wärmeträger-Austritt 33 des Kühl-und/oder Heizelements 25. Der Wärmeträger-Eintritt 31 des Kühl- und/oder Heizelements 25 ist hier beispielhaft durch einen von einer Stirnfläche 34 (Fig. 2) des Kühl- und/oder Heizelements 25 abragenden Rohrstutzen 35 des Kühl- und/oder Heizelements 25 gebildet, mittels dem das Kühl- und/oder Heizelement 25 mit einer in den Figuren nicht gezeigten fahrzeugseitigen Wärmeträger-Zuführleitung lösbar verbunden werden kann. Der Wärmeträger-Austritt 33 ist hier ebenfalls durch einen von der Stirnfläche 34 abragenden Rohrstutzen 37 des Kühl- und/oder Heizelements 25 gebildet, mittels dem das Kühl- und/oder Heizelement 25 mit einer in den Figuren ebenfalls nicht gezeigten fahrzeugseitigen Wärmeträger-Abführleitung 37 lösbar verbunden werden kann.

Sofern das Kühl- und/oder Heizelement 25 in das Gehäuse 3 eingeschoben ist und die Einschuböffnung 17 des Gehäuses 3 mittels des Verschlusselements 15 verschlossen ist, ist der jeweilige Rohrstutzen 35, 37 hier zudem mit einem definierten Spaltabstand durch eine zugeordnete, durchgehende Ausnehmung 39, 41 in dem Verschlusselements 15 geführt, so dass der jeweilige Rohrstutzen 35, 37 in Längsrichtung x nach vorne von dem Gehäuse 3 bzw. von dem Verschlusselement 15 des Gehäuses 3 abragt.

Wie in Figur 3 weiter gezeigt ist, weist das Gehäuse 3 bzw. der Gehäuse-Grundkörper 11 hier auch eine Führungseinrichtung 43 auf, mittels der das in das Gehäuse 3 eingeschobene Kühl- und/oder Heizmodul 23 relativ zu dem Gehäuse 3 in Längsrichtung x linear verlagerbar geführt ist. Die Führungseinrichtung 43 ist hier durch in Längsrichtung x verlaufende, nutartige Vertiefungen bzw. Ausnehmungen 45 in, in Querrichtung y gesehen, gegenüberliegenden seitlichen Gehäusewänden 45 gebildet, in denen das in das Gehäuse 3 eingeschobene Kühl- und/oder Heizmodul 23 randseitig konturangepasst einliegt.

Gemäß Figur 4 weist das Gehäuse 3 hier zudem auch an einer in Längsrichtung x hinteren Gehäusewand 47 innenseitig eine in Gehäuse-Querrichtung y verlaufende nutartige Vertiefung bzw. Ausnehmung 49 auf, in der das in das Gehäuse 3 eingeschobene Kühl- und/oder Heizmodul 23 ebenfalls randseitig konturangepasst einliegt. Ist die Einschuböffnung 17 des Gehäuses 3 mittels des Verschlusselements 15 geschlossen, ist das in das Gehäuse 3 eingeschobene Kühl- und/oder Heizmodul 23 hier daher formschlüssig an dem Gehäuse 3 festgelegt. Zudem ist das in das Gehäuse 3 eingeschobene Kühl- und/oder Heizmodul 23 hier auch in flächiger Anlage mit den seitlichen Gehäusewänden 45, der hinteren Gehäusewand 47 und einer unteren Gehäusewand 48.

Wie in Figur 3 weiter gezeigt ist, weist das Kühl- und/oder Heizmodul 23 hier weiter auch ein Wärmeübertragungselement 51 mit definierten Wärmeübertragungseigenschaften auf. Mittels des Wärmeübertragungselements 51 wird ein definierter Wärmeübergang zwischen dem Gehäuse 3 und dem Kühl- und/oder Heizelement 25 eingestellt. Das Wärmeübertragungselement 51 ist dabei als Zwischenlage zwischen dem Gehäuse 3 und dem Kühl- und/oder Heizelement 25 angeordnet, dergestalt, dass das an dem Gehäuse 3 festgelegte Kühl- und/oder Heizmodul 23 lediglich mit dem Wärmeübertragungselement 51 in Anlage bzw. in direktem Kontakt mit dem Gehäuse 3 ist.

Das Wärmeübertragungselement 51 ist hier beispielhaft als starre Hartschale ausgebildet. Alternativ könnte das Wärmeübertragungselement 51 beispielsweise auch als flexibles Schalenelement ausgebildet sein. An seitlichen Randbereichen 53 (Fig. 3) sowie an einem hinteren Randbereich 55 (Fig. 4) ist das ansonsten plattenförmige Wärmeübertragungselement 51 hier zudem im Querschnitt U-förmig ausgebildet, dergestalt, dass es das Kühl und/oder Heizelement randseitig konturangepasst umgreift. Somit bildet das Wärmeübertragungselement 51 hier auch eine Aufnahme für das Kühl- und/oder Heizelement 25 aus, in die das Kühl- und/oder Heizelement 25 eingeschoben werden kann, um das Kühl- und/oder Heizelement 25 und das Wärmeübertragungselement 51 miteinander zu verbinden.

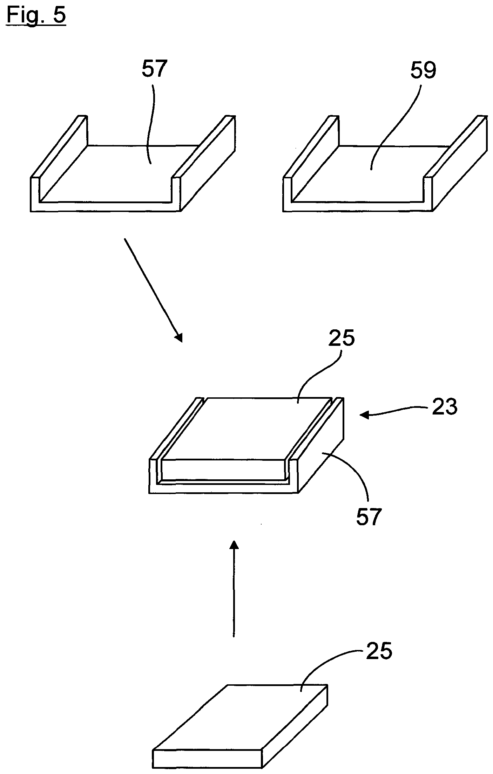

In Figur 5 ist schematisch ein erfindungsgemäßes Verfahren zur Herstellung des Kühl- und/oder Heizmoduls 23 gezeigt. Dabei werden zunächst mehrere, hier beispielhaft zwei, Wärmeübertragungselemente 57, 59 mit unterschiedlichen Wärmeübertragungseigenschaften an einer Montagestation bereitgestellt bzw. vorgehalten. In Abhängigkeit vom Fahrzeugtyp des Fahrzeugs, an das das Batteriemodul 1 bzw. das Kühl- und/oder Heizmodul 23 montiert werden soll, wird dann aus den mehreren Wärmeübertragungselementen 57, 59 ein Wärmeübertragungselemente ausgewählt und mit dem Kühl- und/oder Heizelement 25 verbunden. Konkret wird hier beispielhaft das Wärmeübertragungselement 57 mit besseren Wärmeübertragungseigenschaften als das Wärmeübertragungselement 59 ausgewählt und mit dem Kühl- und/oder Heizelement 25 zu dem Kühl- und/oder Heizmodul 23 verbunden. Das Wärmeübertragungselement 57 mit besseren Wärmeübertragungseigenschaften eignet sich beispielsweise für rein elektrisch angetriebene Fahrzeuge. Das Wärmeübertragungselement 59 mit schlechteren Wärmeübertragungseigenschaften eignet sich beispielsweise für Hybridfahrzeuge.

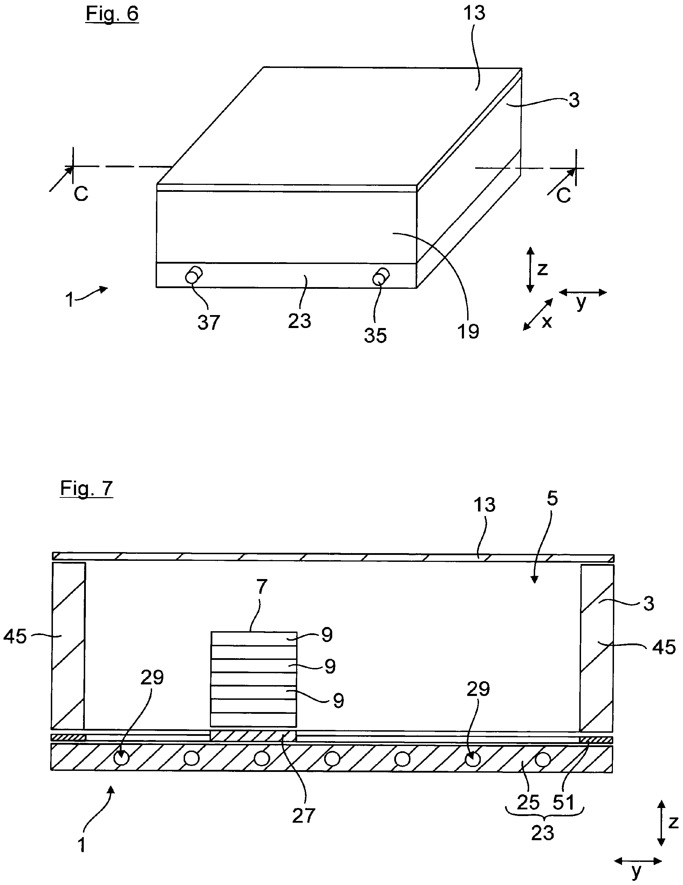

In den Figuren 6 und 7 ist eine nicht von der Erfindung umfasste Ausführungsform des erfindungsgemäßen Batteriemoduls 1 gezeigt. Im Vergleich zu dem in den Figuren 1 bis 4 gezeigten Batteriemodul 1 weist das Gehäuse 3 des Batteriemoduls 1 hier keine Einschuböffnung auf, durch die das Kühl- und/oder Heizmodul 23 in den Aufnahmeraum 5 des Gehäuses 3 eingeschoben werden kann. Anstelle dessen bildet das hier beispielhaft ebenfalls plattenförmig ausgebildete Kühl- und/oder Heizmodul 23 hier ein Deckelelement aus, mittels dem das hier unterseitig offene Gehäuse 3 bzw. der Gehäuse-Grundkörper 11 unterseitig verschlossen werden kann. Das Kühl- und/oder Heizmodul 23 kann hierzu beispielsweise mittels Schraubverbindungen lösbar an dem Gehäuse 3 festgelegt werden. Des Weiteren ist das Wärmeübertragungselement 51 hier als Zwischenlage zwischen dem Gehäuse 3 und dem Kühl- und/oder Heizelement 25 des Kühl- und/oder Heizmoduls 23 ausgebildet.

### Bezugszeichenliste

- 1: Batteriemodul
- 3: Gehäuse
- 5: Aufnahmeraum
- 7: Batteriezellenelement
- 9: Batteriezelle
- 11: Grundkörper
- 13: Deckel
- 15: Verschlusselement
- 17: Einschuböffnung
- 19: vordere Gehäusewand
- 21: äußerer Wandbereich
- 23: Kühl- und/oder Heizmodul
- 25: Kühl- und/oder Heizelement
- 27: Wärmeleitpad
- 29: Strömungskanal
- 31: Wärmeträger-Eintritt
- 33: Wärmeträger-Austritt
- 35: Rohrstutzen
- 37: Rohrstutzen
- 39: Ausnehmung
- 41: Ausnehmung
- 43: Vertiefung
- 45: seitliche Gehäusewand
- 47: hintere Gehäusewand
- 48: untere Gehäusewand
- 49: Vertiefung
- 51: Wärmeübertragungselement
- 53: seitlicher Randbereich
- 55: hinterer Randbereich
- 57: Wärmeübertragungselement
- 59: Wärmeübertragungselement

## Patentansprüche

1. Batteriemodul für ein Fahrzeug, insbesondere für ein Nutzfahrzeug, mit einem, einen Aufnahmeraum (5) aufweisenden Gehäuse (3), wobei in dem Aufnahmeraum (5) wenigstens ein Batteriezellenelement (7) angeordnet ist, und mit einer Kühl- und/oder Heizeinrichtung, mittels der das Batteriezellenelement (7) kühlbar und/oder heizbar ist,
wobei die Kühl- und/oder Heizeinrichtung durch ein Kühl- und/oder Heizmodul (23) als separates Bauteil gebildet ist, das mittels einer Fixiereinrichtung an dem Gehäuse (3) festlegbar ist,
wobei das Kühl- und/oder Heizmodul (23) ein Kühl- und/oder Heizelement (25) aufweist, mittels dem das wenigstens eine Batteriezellenelement (7) kühlbar und/oder heizbar ist, und wobei das Gehäuse (3) eine Einschuböffnung (17) aufweist, durch die das Kühl- und/oder Heizmodul (23) schubladenartig in den Aufnahmeraum (5) des Gehäuses (3) einschiebbar ist,
wobei das Gehäuse (3) ein Verschlusselement (15) aufweist, mittels dem die Einschuböffnung (17) verschließbar ist,
wobei zur Einstellung einer definierten Wärmeübertragung zwischen dem Gehäuse (13) und dem Kühl- und/oder Heizelement (25) als Zwischenlage zwischen dem Gehäuse (3) und dem Kühl- und/oder Heizelement (25) wenigstens ein Wärmeübertragungselement (51) mit definierten Wärmeübertragungseigenschaften angeordnet ist, und
wobei das Wärmeübertragungselement (51) dem Kühl- und/oder Heizmodul (23) zugeordnet ist, so dass das Kühl- und/oder Heizelement (25) und das Wärmeübertragungselement (51) eine Baueinheit ausbilden.

2. Batteriemodul nach Anspruch 1, **dadurch gekennzeichnet, dass** das Gehäuse (3) eine Führungseinrichtung aufweist, mittels der das zumindest teilweise in das Gehäuse (3) eingeschobene Kühl- und/oder Heizmodul (23) linear verlagerbar geführt ist.

3. Batteriemodul nach Anspruch 1 oder 2, **dadurch gekennzeichnet, dass** die Fixiereinrichtung und/oder die Führungseinrichtung durch in Gehäuse-Längsrichtung (x) verlaufende, insbesondere nutartige, Vertiefungen (43) in gegenüberliegenden seitlichen Gehäusewänden (45) gebildet ist, in denen das eingeschobene Kühl- und/oder Heizmodul (23), insbesondere randseitig, konturangepasst einliegt.

4. Batteriemodul nach Anspruch 3, **dadurch gekennzeichnet, dass** die Fixiereinrichtung zudem durch eine in Gehäuse-Querrichtung (y) verlaufende, insbesondere nutartige, Vertiefung (49) in einer hinteren Gehäusewand (47) gebildet ist, in der das eingeschobene Kühl- und/oder Heizmodul (23) ebenfalls, insbesondere randseitig, konturangepasst einliegt.

5. Batteriemodul nach einem der vorhergehenden Ansprüche, **dadurch gekennzeichnet, dass** das an dem Gehäuse (3) festgelegte Kühl- und/oder Heizmodul (23) in, insbesondere flächiger, Anlage mit dem Gehäuse (3) ist.

6. Batteriemodul nach Anspruch 5, **dadurch gekennzeichnet, dass** das an dem Gehäuse (3) festgelegte Kühl- und/oder Heizmodul (23) in, insbesondere flächiger, Anlage mit einer unteren Gehäusewand (48) und/oder mit wenigstens einer seitlichen Gehäusewand (45) und/oder mit einer hinteren Gehäusewand (47) ist.

7. Batteriemodul nach einem der vorhergehenden Ansprüche, **dadurch gekennzeichnet, dass** das Kühl- und/oder Heizelement (25) wenigstens einen Strömungskanal (29) aufweist, der zur Kühlung und/oder Heizung des Batteriezellenelements (7) von einem Wärmeträger, insbesondere von einem Kühl- und/oder Heizmittel, durchströmbar ist.

8. Batteriemodul nach Anspruch 7, **dadurch gekennzeichnet, dass** das Kühl- und/oder Heizelement (25) eine Anschlusseinrichtung (35, 37) aufweist, mittels der das Kühl- und/oder Heizelement (25) mit einer Wärmeträger-Zuführleitung und/oder mit einer Wärmeträger-Abführleitung, insbesondere strömungstechnisch, verbindbar ist.

9. Batteriemodul nach einem der vorhergehenden Ansprüche, **dadurch gekennzeichnet, dass** das Wärmeübertragungselement (51) derart ausgebildet und angeordnet ist, dass das an dem Gehäuse (3) festgelegte Kühl- und/oder Heizelement (25) nicht in Anlage mit dem Gehäuse (3) ist und/oder lediglich in Anlage mit dem Wärmeübertragungselement (51) ist.

10. Batteriemodul nach einem der vorhergehenden Ansprüche, **dadurch gekennzeichnet, dass** das Kühl- und/oder Heizelement (23) und das, insbesondere starr und/oder als Hartschale ausgebildete, Wärmeübertragungselement (51) formschlüssig und/oder stoffschlüssig miteinander verbunden sind.

11. Batteriemodul nach einem der vorhergehenden Ansprüche, **dadurch gekennzeichnet, dass** das Wärmeübertragungselement (51) durch ein, eine Wärmeleitfähigkeit kleiner als 0,1 W/(m•K) aufweisendes Material gebildet ist, oder dass das Wärmeübertragungselement (51) durch ein, eine Wärmeleitfähigkeit größer als 10 W/(m•K), besonders bevorzugt eine Wärmeleitfähigkeit größer als 70 W/(m•K), aufweisendes Material gebildet ist.

12. Verfahren zur Herstellung eines Batteriemoduls, wobei das Batteriemodul ein, einen Aufnahmeraum (5) aufweisendes Gehäuse (3) aufweist, wobei in dem Aufnahmeraum (5) wenigstens ein Batteriezellenelement (7) des Batteriemoduls angeordnet ist, wobei das Batteriemodul eine Kühl- und/oder Heizeinrichtung aufweist, mittels der das Batteriezellenelement (7) gekühlt und/oder geheizt wird, wobei die Kühl- und/oder Heizeinrichtung durch ein Kühl- und/oder Heizmodul (23) als separates Bauteil gebildet ist, das mittels einer Fixiereinrichtung an dem Gehäuse (3) festgelegt wird, wobei das Kühl- und/oder Heizmodul (23) ein, insbesondere plattenförmiges, Kühl- und/oder Heizelement (25) aufweist, mittels dem das wenigstens eine Batteriezellenelement (7) gekühlt und/oder geheizt wird, **dadurch gekennzeichnet,**
**dass** bei der Montage des Batteriemoduls (1) und/oder des Kühl- und/oder Heizmoduls (23) mehrere Wärmeübertragungselemente (57, 59) mit unterschiedlichen Wärmeübertragungseigenschaften bereitgestellt werden, wobei mittels des jeweiligen Wärmeübertragungselements (57, 59) eine definierte Wärmeübertragung zwischen dem Gehäuse (3) und dem Kühl- und/oder Heizelement (25) eingestellt wird, und wobei in Abhängigkeit vom Fahrzeugtyp des Fahrzeugs, an das das Batteriemodul (1) montiert werden soll, aus den mehreren Wärmeübertragungselementen (57, 59) ein Wärmeübertragungselement ausgewählt und montiert wird.

13. Verfahren nach Anspruch 12, **dadurch gekennzeichnet, dass** das Kühl- und/oder Heizmodul (23) ein, insbesondere plattenförmiges, Kühl- und/oder Heizelement (25) aufweist, mittels dem das wenigstens eine Batteriezellenelement (7) gekühlt und/oder geheizt wird,
wobei bei der Montage des Batteriemoduls (1) in Abhängigkeit vom Fahrzeugtyp des Fahrzeugs, an das das Batteriemodul (1) montiert werden soll, insbesondere selbsttätig, ein Wärmeübertragungselement mit definierten Wärmeübertragungseigenschaften an das Kühl- und/oder Heizmodul (23) montiert wird oder nicht, wobei mittels des Wärmeübertragungselements ein definierter Wärmeübertragung zwischen dem Gehäuse (3) und dem Kühl- und/oder Heizelement (25) eingestellt wird.

14. Fahrzeug, insbesondere Nutzfahrzeug, mit einem Batteriemodul nach einem der Ansprüche 1 bis 11.

## Claims

1. Battery module for a vehicle, in particular for a commercial vehicle, having a housing (3) which has a receptacle space (5), wherein at least one battery cell element (7) is disposed in the receptacle space (5), and having a cooling and/or heating installation by means of which the battery cell element (7) is able to be cooled and/or heated;
wherein the cooling and/or heating installation by a cooling and/or heating module (23) is formed as a separate component which by means of a fixing installation is able to be established on the housing (3);
wherein the cooling and/or heating module (23) has a cooling and/or heating element (25) by means of which the at least one battery cell element (7) is able to be cooled and/or heated, and wherein the housing (3) has an insertion opening (17) through which the cooling and/or heating module (23) in the manner of a drawer is able to be inserted into the receptacle space (5) of the housing (3);
wherein the housing (3) has a closure element (15) by means of which the insertion opening (17) is able to be closed;
wherein, for adjusting a defined thermal transfer between the housing (3) and the cooling and/or heating element (25), at least one thermal transfer element (51) having defined thermal transfer properties is disposed as an interlayer between the housing (3) and the cooling and/or heating element (25); and
wherein the thermal transfer element (51) is assigned to the cooling and/or heating module (23) such that the cooling and/or heating element (25) and the thermal transfer element (51) form one functional unit.

2. Battery module according to Claim 1, **characterized in that** the housing (3) has a guiding installation by means of which the cooling and/or heating module (23), which is at least partially inserted into the housing (3), is guided so as to be linearly displaceable.

3. Battery module according to Claim 1 or 2, **characterized in that** the fixing installation and/or the guiding installation are/is formed by in particular groove-type depressions (43) which in mutually opposite lateral housing walls (45) run in the housing longitudinal direction (x), and in which the inserted cooling and/or heating module (23) lies so as to match, in particular peripherally, in terms of the contour.

4. Battery module according to Claim 3, **characterized in that** the fixing installation is moreover formed by an in particular groove-type depression (49) which in a rear housing wall (47) runs in a housing transverse direction (y), and in which the inserted cooling and/or heating module (23) likewise lies so as to match, in particular peripherally, in terms of the contour.

5. Battery module according to one of the preceding claims, **characterized in that** the cooling and/or heating module (23) established on the housing (3) bears, in particular in a planar manner, on the housing (3).

6. Battery module according to Claim 5, **characterized in that** the cooling and/or heating module (23) established on the housing (3) bears, in particular in a planar manner, on a lower housing wall (48) and/or on at least one lateral housing wall (45) and/or on a rear housing wall (47).

7. Battery module according to one of the preceding claims, **characterized in that** the cooling and/or heating element (25) has at least one flow duct (39) which for cooling and/or heating the battery cell element (7) is a able to be passed through by a flow of a heat transfer medium, in particular by flow of a cooling and/or heating medium.

8. Battery module according to Claim 7, **characterized in that** the cooling and/or heating element (25) has a connector installation (35, 37) by means of which the cooling and/or heating element (25) is able to be, in particular fluidically, connected to a heat transfer medium supply line and/or to a heat transfer medium discharge line.

9. Battery module according to one of the preceding claims, **characterized in that** the thermal transfer element (51) is configured and disposed in such a manner that the cooling and/or heating element (25) established on the housing (3) does not bear on the housing (3) and/or bears only on the thermal transfer element (51).

10. Battery module according to one of the preceding claims, **characterized in that** the cooling and/or heating element (23) and the thermal transfer element (51), in particular configured so as to be rigid and/or as a hard shell, are connected to one another in a formfitting and/or materially integral manner.

11. Battery module according to one of the preceding claims, **characterized in that** the thermal transfer element (51) is formed by a material having a thermal conductivity of less than 0.1 W/(m K), or **in that** the thermal transfer element (51) is formed by a material having a thermal conductivity of more than 10 W/(m K), particularly preferably a thermal conductivity of more than 70 W/(m·K).

12. Method for producing a battery module, wherein the battery module has a housing (3) having a receptacle space (5), wherein at least one battery cell element (7) of the battery module is disposed in the receptacle space (5); wherein the battery module has a cooling and/or heating installation by means of which the battery cell element (7) is cooled and/or heated, wherein the cooling and/or heating installation is formed by a cooling and/or heating module (23) as a separate component which by means of a fixing installation is established on the housing (3); wherein the cooling and/or heating module (23) has an in particular plate-shaped cooling and/or heating element (25) by means of which the at least one battery cell element (7) is cooled and/or heated, **characterized in that**,
when assembling the battery module (1) and/or the cooling and/or heating module (23), a plurality of thermal transfer elements (57, 59) having dissimilar thermal transfer properties are provided, wherein a defined thermal transfer between the housing (3) and the cooling and/or heating element (25) is adjusted by means of the respective thermal transfer element (57, 59) and wherein, as a function of the vehicle type of the vehicle on which the battery module (1) is to be assembled, one thermal transfer element is selected from the plurality of the thermal transfer elements (57, 59) and assembled.

13. Method according to Claim 12, **characterized in that** the cooling and/or heating module (23) has an in particular plate-shaped cooling and/or heating element (25) by means of which the at least one battery cell element (7) is cooled and/or heated;
wherein, when assembling the battery module (1), as a function of the vehicle type of the vehicle on which the battery module (1) is to be assembled, a thermal transfer element having defined thermal transfer properties, particularly in a self-acting manner, is or is not assembled on the cooling and/or heating module (23), wherein a defined thermal transfer between the housing (3) and the cooling and/or heating element (25) is adjusted by means of the thermal transfer element.

14. Vehicle, in particular commercial vehicle, having a battery module according to one of Claims 1 to 11.

## Revendications

1. Module de batterie pour un véhicule, notamment pour un véhicule utilitaire, avec un boîtier (3) présentant un espace de réception (5), au moins un élément de cellule de batterie (7) étant agencé dans l'espace de réception (5), et avec un dispositif de refroidissement et/ou de chauffage au moyen duquel l'élément de cellule de batterie (7) peut être refroidi et/ou chauffé,
le dispositif de refroidissement et/ou de chauffage étant formé par un module de refroidissement et/ou de chauffage (23) en tant que composant séparé, qui peut être fixé au boîtier (3) au moyen d'un dispositif de fixation,
le module de refroidissement et/ou de chauffage (23) présentant un élément de refroidissement et/ou de chauffage (25) au moyen duquel l'au moins un élément de cellule de batterie (7) peut être refroidi et/ou chauffé, et le boîtier (3) présentant une ouverture d'insertion (17) à travers laquelle le module de refroidissement et/ou de chauffage (23) peut être inséré à la manière d'un tiroir dans l'espace de réception (5) du boîtier (3),
le boîtier (3) présentant un élément de fermeture (15) au moyen duquel l'ouverture d'insertion (17) peut être fermée,
pour régler une transmission de chaleur définie entre le boîtier (13) et l'élément de refroidissement et/ou de chauffage (25), au moins un élément de transmission de chaleur (51) ayant des propriétés de transmission de chaleur définies étant agencé en tant que couche intermédiaire entre le boîtier (3) et l'élément de refroidissement et/ou de chauffage (25), et
l'élément de transmission de chaleur (51) étant associé au module de refroidissement et/ou de chauffage (23) de telle sorte que l'élément de refroidissement et/ou de chauffage (25) et l'élément de transmission de chaleur (51) forment une unité de construction.

2. Module de batterie selon la revendication 1, **caractérisé en ce que** le boîtier (3) présente un dispositif de guidage au moyen duquel le module de refroidissement et/ou de chauffage (23) inséré au moins partiellement dans le boîtier (3) est guidé de manière à pouvoir être déplacé linéairement.

3. Module de batterie selon la revendication 1 ou 2, **caractérisé en ce que** le dispositif de fixation et/ou le dispositif de guidage sont formés par des renfoncements (43), notamment en forme de rainures, s'étendant dans la direction longitudinale du boîtier (x), dans des parois de boîtier latérales opposées (45), dans lesquels le module de refroidissement et/ou de chauffage (23) inséré est placé en épousant le contour, notamment sur le bord.

4. Module de batterie selon la revendication 3, **caractérisé en ce que** le dispositif de fixation est en outre formé par un renfoncement (49), notamment en forme de rainure, s'étendant dans la direction transversale du boîtier (y), dans une paroi de boîtier arrière (47), dans lequel le module de refroidissement et/ou de chauffage (23) inséré est également placé en épousant le contour, notamment sur le bord.

5. Module de batterie selon l'une quelconque des revendications précédentes, **caractérisé en ce que** le module de refroidissement et/ou de chauffage (23) fixé sur le boîtier (3) est en application, notamment à plat, avec le boîtier (3).

6. Module de batterie selon la revendication 5, **caractérisé en ce que** le module de refroidissement et/ou de chauffage (23) fixé au boîtier (3) est en application, notamment à plat, avec une paroi de boîtier inférieure (48) et/ou avec au moins une paroi de boîtier latérale (45) et/ou avec une paroi de boîtier arrière (47).

7. Module de batterie selon l'une quelconque des revendications précédentes, **caractérisé en ce que** l'élément de refroidissement et/ou de chauffage (25) présente au moins un canal d'écoulement (29) qui peut être traversé par un fluide caloporteur, notamment par un moyen de refroidissement et/ou de chauffage, pour refroidir et/ou chauffer l'élément de cellule de batterie (7).

8. Module de batterie selon la revendication 7, **caractérisé en ce que** l'élément de refroidissement et/ou de chauffage (25) présente un dispositif de raccordement (35, 37) au moyen duquel l'élément de refroidissement et/ou de chauffage (25) peut être relié, notamment fluidiquement, à une conduite d'amenée de fluide caloporteur et/ou à une conduite d'évacuation de fluide caloporteur.

9. Module de batterie selon l'une quelconque des revendications précédentes, **caractérisé en ce que** l'élément de transmission de chaleur (51) est configuré et agencé de telle sorte que l'élément de refroidissement et/ou de chauffage (25) fixé au boîtier (3) n'est pas en application avec le boîtier (3) et/ou est seulement en application avec l'élément de transmission de chaleur (51).

10. Module de batterie selon l'une quelconque des revendications précédentes, **caractérisé en ce que** l'élément de refroidissement et/ou de chauffage (23) et l'élément de transmission de chaleur (51), notamment configuré sous forme rigide et/ou sous forme de coque dure, sont reliés entre eux par complémentarité de forme et/ou par liaison de matière.

11. Module de batterie selon l'une quelconque des revendications précédentes, **caractérisé en ce que** l'élément de transmission de chaleur (51) est formé par un matériau présentant une conductivité thermique inférieure à 0,1 W/(m K), ou **en ce que** l'élément de transmission de chaleur (51) est formé par un matériau présentant une conductivité thermique supérieure à 10 W/(m K), de manière particulièrement préférée une conductivité thermique supérieure à 70 W/(m K).

12. Procédé de fabrication d'un module de batterie, le module de batterie présentant un boîtier (3) présentant un espace de réception (5), au moins un élément de cellule de batterie (7) du module de batterie étant agencé dans l'espace de réception (5), le module de batterie présentant un dispositif de refroidissement et/ou de chauffage au moyen duquel l'élément de cellule de batterie (7) est refroidi et/ou chauffé, le dispositif de refroidissement et/ou de chauffage étant formé par un module de refroidissement et/ou de chauffage (23) en tant que composant séparé, qui est fixé au boîtier (3) au moyen d'un dispositif de fixation, le module de refroidissement et/ou de chauffage (23) présentant un élément de refroidissement et/ou de chauffage (25), notamment en forme de plaque, au moyen duquel l'au moins un élément de cellule de batterie (7) est refroidi et/ou chauffé, **caractérisé en ce que**
lors du montage du module de batterie (1) et/ou du module de refroidissement et/ou de chauffage (23), plusieurs éléments de transmission de chaleur (57, 59) ayant différentes propriétés de transmission de chaleur sont fournis, une transmission de chaleur définie étant ajustée entre le boîtier (3) et l'élément de refroidissement et/ou de chauffage (25) au moyen de l'élément de transmission de chaleur respectif (57, 59), et un élément de transmission de chaleur étant sélectionné parmi les plusieurs éléments de transmission de chaleur (57, 59) en fonction du type de véhicule du véhicule sur lequel le module de batterie (1) doit être monté, et monté.

13. Procédé selon la revendication 12, **caractérisé en ce que** le module de refroidissement et/ou de chauffage (23) présente un élément de refroidissement et/ou de chauffage (25), notamment en forme de plaque, au moyen duquel l'au moins un élément de cellule de batterie (7) est refroidi et/ou chauffé,
lors du montage du module de batterie (1), en fonction du type de véhicule du véhicule sur lequel le module de batterie (1) doit être monté, notamment de manière autonome, un élément de transmission de chaleur ayant des propriétés de transmission de chaleur définies étant monté ou non sur le module de refroidissement et/ou de chauffage (23), une transmission de chaleur définie étant ajustée entre le boîtier (3) et l'élément de refroidissement et/ou de chauffage (25) au moyen de l'élément de transmission de chaleur.

14. Véhicule, notamment véhicule utilitaire, avec un module de batterie selon l'une quelconque des revendications 1 à 11.
